# EUROPEAN PATENT APPLICATION

(11) **EP 4 803 591 A1**
(43) Date of publication of application: **09.09.2026**
(21) Application number: 26162115.5
(22) Date of filing: 03.03.2026
(51) Int. Cl.: C09K 5/06

(54) **LATENT HEAT STORAGE MEMBER AND METHOD FOR MANUFACTURING LATENT HEAT STORAGE MEMBER**

(30) Priority: 05.03.2025 JP 2025034298
(71) Applicant: SHINKO ELECTRIC INDUSTRIES CO., LTD., Nagano-shi, Nagano 381-2287 (JP)
(72) Inventor: WATANABE, Takuya, NAGANO, 381-2287 (JP); HORIUCHI, Michio, NAGANO, 387-0024 (JP); SHIMIZU, Yuichiro, NAGANO, 381-2287 (JP); NAGAI, Koji, NAGANO, 381-2287 (JP)
(74) Representative: Regimbeau

(57) **Abstract**

A latent heat storage member includes a ceramic part having a closed space formed therein, and a latent heat storage part including aluminum and provided inside the closed space. A purity of a main component of the ceramic part is 99.5 mass% or higher.

## Description

### FIELD

Certain aspects of the embodiments discussed herein are related to latent heat storage members, and methods for manufacturing latent heat storage members.

### BACKGROUND

For example, Japanese Laid-Open Patent Publication No. 2023-172735 describes a latent heat storage part including a ceramic part that forms a closed space, and a metal part that includes aluminum and is provided inside the closed space.

Although the latent heat storage part described in Japanese Laid-Open Patent Publication No. 2023-172735 can achieve its intended object, there are increasing demands in recent years to improve a mechanical strength of latent heat storage member.

### SUMMARY

It is an object in one aspect of the embodiments of the present disclosure to provide a latent heat storage member capable of improving a mechanical strength, and a method for manufacturing such a latent heat storage member.

According to one aspect of the embodiments of the present disclosure, a latent heat storage member including a ceramic part having a closed space formed therein; and a latent heat storage part including aluminum and provided inside the closed space, wherein a purity of a main component of the ceramic part is 99.5 mass% or higher.

The object and advantages of the embodiments will be realized and attained by means of the elements and combinations particularly pointed out in the claims.

It is to be understood that both the foregoing general description and the following detailed description are exemplary and explanatory and not restrictive of the invention, as claimed.

### BRIEF DESCRIPTION OF THE DRAWINGS

FIG. 1A, FIG. 1B, and FIG. 1C are diagrams illustrating an example of a latent heat storage member according to a first embodiment;
FIG. 2A and FIG. 2B are cross sectional views illustrating an example of a method for manufacturing the latent heat storage member according to the first embodiment;
FIG. 3A, FIG. 3B, FIG. 3C, and FIG. 3D are diagrams illustrating examples of observation results of a sample manufactured according to a reference example;
FIG. 4A, FIG. 4B, FIG. 4C, and FIG. 4D are diagrams illustrating examples of observation results of a sample manufactured according to the first embodiment;
FIG. 5 is a diagram illustrating an example of optical microscope observation results of the sample manufactured according to the reference example; and
FIG. 6 is a diagram illustrating an example of the latent heat storage member according to a second embodiment.

### DESCRIPTION OF EMBODIMENTS

Hereinafter, embodiments of the present disclosure will be described in detail with reference to the accompanying drawings. In the present specification and the drawings, constituent elements or components having substantially the same functional configuration are designated by the same reference numerals, and a redundant description thereof may be omitted.

### <First Embodiment>

A first embodiment will be described. The first embodiment relates to a latent heat storage member.

### [Configuration of Latent Heat Storage Member]

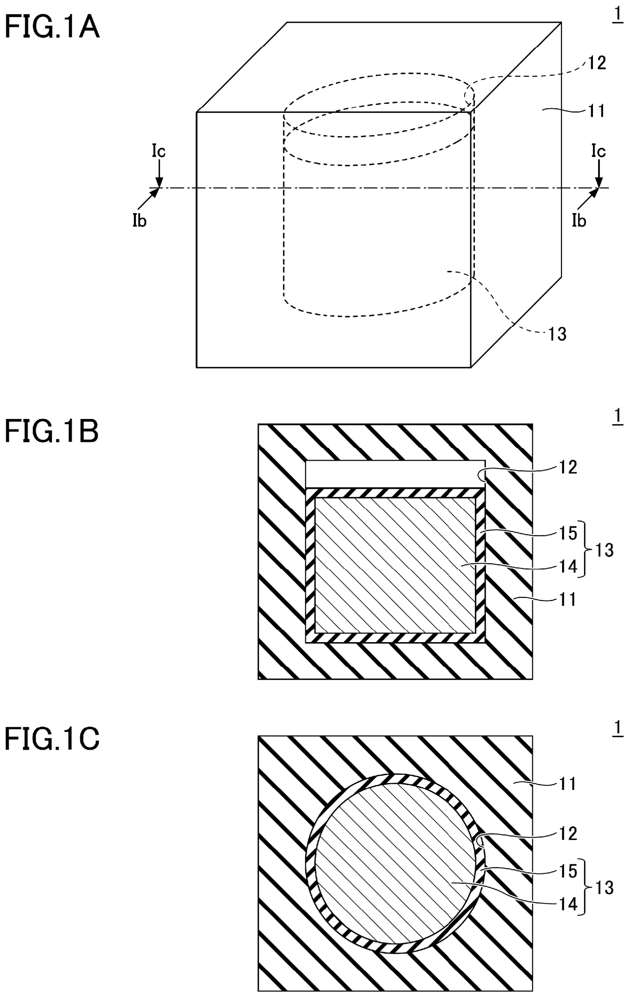

A configuration of the latent heat storage member according to the first embodiment will be described. FIG. 1A, FIG. 1B, and FIG. 1C are diagrams illustrating an example of the latent heat storage member according to the first embodiment. FIG. 1A is a perspective view of the latent heat storage member, and FIG. 1B and FIG. 1C are cross sectional views of the latent heat storage member.

As illustrated in FIG. 1A through FIG. 1C, a latent heat storage member (or latent heat storage component) 1 according to the first embodiment includes a ceramic part 11 and a latent heat storage part (or latent heat storage material) 13. A closed space 12 is formed inside the ceramic part 11. The ceramic part 11 is integrally formed and is monolithic, for example. For example, the ceramic part 11 does not have a bonding portion in the closed space 12, bonding two ceramic pieces with opposing cavities, for example. In the present specification, "does not have a bonding portion" refers to a state where there is no discontinuity in both composition and microstructure, that is, the composition is not discontinuous (no bonding material is used to bond two different compositions) and the microstructure is not discontinuous (no later introduced portion of the same kind of material is present). The ceramic part 11 is formed by firing a plurality of green sheets, for example. The closed space 12 is formed by connecting openings formed in some of the plurality of green sheets. For example, an outer shape of the ceramic part 11 is a rectangular parallelepiped shape, and a shape of the closed space 12 is a cylindrical shape. However, the outer shape of the ceramic part 11 and the shape of the closed space 12 are not specifically limited.

The latent heat storage part 13 is provided inside the closed space 12. In other words, the latent heat storage part 13 is sealed inside the ceramic part 11. That is, the latent heat storage part 13 is hermetically covered with or enclosed by the ceramic part 11 that constitutes a continuous body. The ceramic part 11 has a function of preventing leakage of melted latent heat storage part 13. A gap is formed between the latent heat storage part 13 and a portion of an inner wall surface of the closed space 12. The latent heat storage part 13 is in contact with the inner wall surface of the closed space 12. However, the latent heat storage part 13 is not bonded to the inner wall surface, and the latent heat storage part 13 is movable inside the closed space 12.

The latent heat storage part 13 has a metal part 14 including aluminum, and an oxide film 15 covering the metal part 14. A thickness of the oxide film 15 is in a range greater than or equal to 0.1 µm and less than or equal to 80 µm, for example. A thickness of the oxide film 15 is preferably in a range greater than or equal to 0.1 µm and less than or equal to 30 µm, for example.

A main component of the metal part 14 is aluminum. The metal part 14 may include aluminum in a proportion of 99 mass% or higher. That is, the metal part 14 may be made of aluminum having a purity of 99 mass% or higher. In the present disclosure, the main component refers to a component having a highest content ratio. A melting point of the metal part 14 is 200°C or higher, for example. A melting point of aluminum is approximately 660°C.

A purity of the main component of the ceramic part 11 is 99.5 mass% or higher. The purity of the main component of the ceramic part 11 is preferably 99.9 mass% or higher. The main component of the ceramic part 11 is aluminum oxide (Al₂O₃), for example. Although details will be described later, the ceramic part 11 is a solid-phase sintered body formed from green sheets including no sintering aid, and the ceramic part 11 does not include glass. A concentration of silicon in the ceramic part 11 is 0.5 mass% or lower, preferably 0.1 mass% or lower, and more preferably 0.03 mass% or lower, for example.

### [Method for Manufacturing Latent Heat Storage Member]

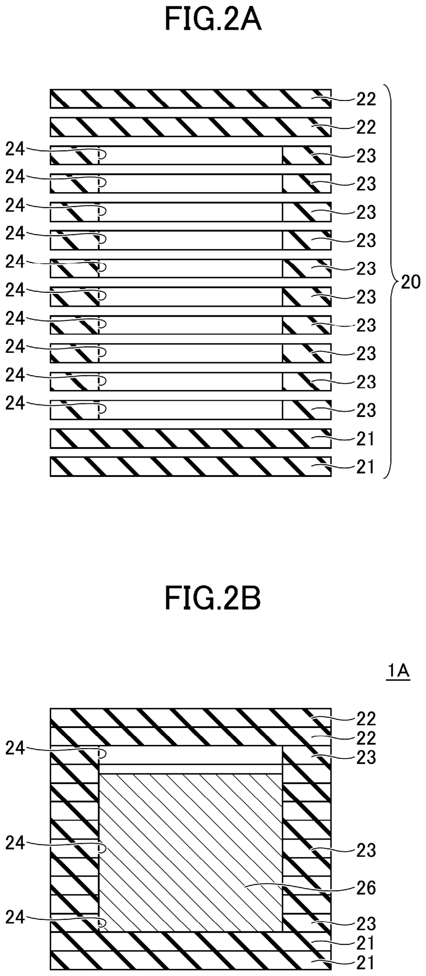

A method for manufacturing the latent heat storage member according to the first embodiment will be described. FIG. 2A and FIG. 2B are cross sectional views illustrating an example of the method for manufacturing the latent heat storage member according to the first embodiment. FIG. 2A and FIG. 2B illustrate cross sections corresponding to FIG. 1B.

First, as illustrated in FIG. 2A, three or more green sheets 20 are prepared. The green sheets 20 do not include a sintering aid, and a purity of a main component of the green sheets 20 is 99.5 mass% or higher except for a base material, such as an organic material or the like.

The three or more green sheets 20 include one or more green sheets 21, one or more green sheets 22, and one or more green sheets 23. The green sheet 21 constitutes a portion of the ceramic part 11 on one side in an axial direction of the closed space 12 after firing, and no opening is formed in the green sheet 21. The green sheet 22 constitutes a portion of the ceramic part 11 on the other side in the axial direction of the closed space 12 after firing, and no opening is formed in the green sheet 22. The green sheet 23 is disposed between the green sheet 21 and the green sheet 22, and constitutes a portion of the ceramic part 11 in a periphery of the closed space 12 in a radial direction after firing. The green sheet 23 is formed with an opening 24 constituting the closed space 12 after firing.

In addition, as illustrated in FIG. 2B, the metal part 26 including aluminum is prepared as a solid bulk. The metal part 26 may have a passive film on a surface thereof. Next, the green sheets 21, 22, and 23 are stacked while accommodating the metal part 26 inside the opening 24 of the green sheet 23. Accordingly, a composite 1A that includes the metal part 26 including aluminum and the green sheets 21, 22, and 23 accommodating the metal part 26 is prepared. The green sheets 21, 22, and 23 are an example of an unfired ceramic part.

Next, the composite 1A is heated to fire the green sheets 21, 22, and 23. Because the green sheets 21, 22, and 23 do not include a sintering aid, the green sheets 21, 22, and 23 undergo solid-phase sintering when fired. As a result of the solid-phase sintering of the green sheets 21, 22, and 23, the ceramic part 11 illustrated in FIG. 1A through FIG. 1C is formed.

An atmosphere during the firing is an oxidizing atmosphere including an oxidizing gas, such as air or the like. Due to the firing in the oxidizing atmosphere, a surface of the metal part 26 is oxidized, and the latent heat storage part 13 that includes the metal part 14 including aluminum and the oxide film 15 covering the metal part 14 is formed from the metal part 26 illustrated in FIG. 1A through FIG. 1C. In a case where a passive film is formed on the surface of the metal part 26, the oxide film 15 is formed thicker than the passive film so as to include the passive film.

The latent heat storage member 1 can be manufactured in the manner described above.

Next, advantageous features or effects of the latent heat storage member 1 according to the first embodiment will be described in comparison with a latent heat storage member according to a reference example.

When manufacturing the latent heat storage member according to the reference example, the ceramic part is formed using green sheets that include aluminum oxide having a purity of 96 mass% and glass powder including silicon as a sintering aid. In this case, when firing the green sheets, the glass powder melts, and the green sheets are liquid-phase sintered. Accordingly, the ceramic part is a liquid-phase sintered body and includes glass.

In the case where the latent heat storage member according to the reference example is manufactured in the manner described above, silicon diffuses into the metal part that melts during the firing, and the metal part is bonded to the ceramic part during solidification. In addition, although a temperature of the metal part and a temperature of the ceramic part are lowered even after the metal part solidifies, when the metal part is bonded to the ceramic part, thermal stress acts on the ceramic part because amounts of thermal contraction differ between the metal part and the ceramic part. As a result, the ceramic part may develop delamination or cracks.

In contrast, in the latent heat storage member 1 according to the first embodiment, the purity of the main component of the ceramic part 11 is 99.5 mass% or higher, and the ceramic part 11 includes substantially no silicon. For this reason, bonding of the metal part 14 to the ceramic part 11 due to the diffusion of silicon does not occur. Accordingly, thermal stress from the metal part 14 does not act on the ceramic part 11, and it is possible to improve a mechanical strength of the latent heat storage member 1 because no internal stress is generated. The suppression of the thermal stress in the ceramic part 11 reduces the delamination and cracks in the ceramic part 11, and it is possible to improve durability and reliability of the latent heat storage member 1.

Moreover, in the latent heat storage member 1, the latent heat storage part 13 has the oxide film 15 covering the metal part 14. For this reason, the metal part 14 and the ceramic part 11 are less likely to come into contact with each other. Hence, even in a case where silicon at an impurity level is included in the ceramic part 11, the metal part 14 melted due to accumulation of latent heat is less likely to come into contact with the ceramic part 11, and the metal part 14 is less likely to become bonded to the ceramic part 11 when the metal part 14 solidifies during heat dissipation.

The latent heat storage part 13 does not need to have the oxide film 15. In a case where the oxide film 15 is not formed, the atmosphere during firing of the green sheets 21, 22, and 23 may be a reducing atmosphere including a reducing gas, such as hydrogen gas or the like, or a non-oxidizing atmosphere including a non-oxidizing gas, such as nitrogen gas or the like, for example.

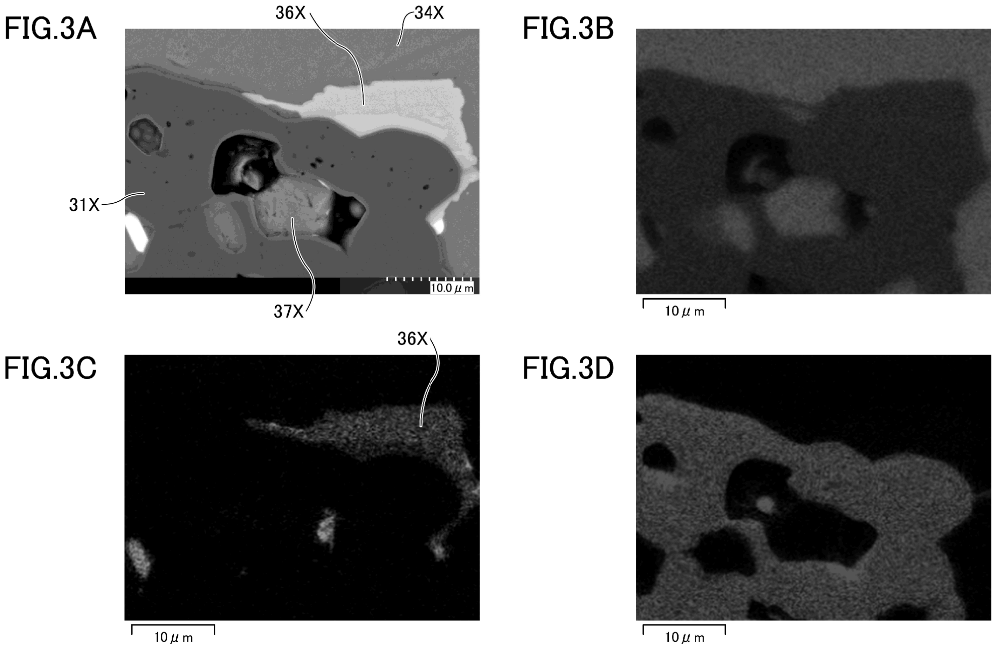

Next, observation results of a sample manufactured by the present inventors according to the reference example and a sample manufactured according to the first embodiment will be described. FIG. 3A, FIG. 3B, FIG. 3C, and FIG. 3D are diagrams illustrating the observation results of the sample manufactured according to the reference example. FIG. 3A illustrates a scanning electron microscope (SEM) image. FIG. 3B, FIG. 3C, and FIG. 3D illustrate the results of energy dispersive X-ray spectroscopy (EDX) of an observation region illustrated in FIG. 3A for aluminum, silicon, and oxygen, respectively.

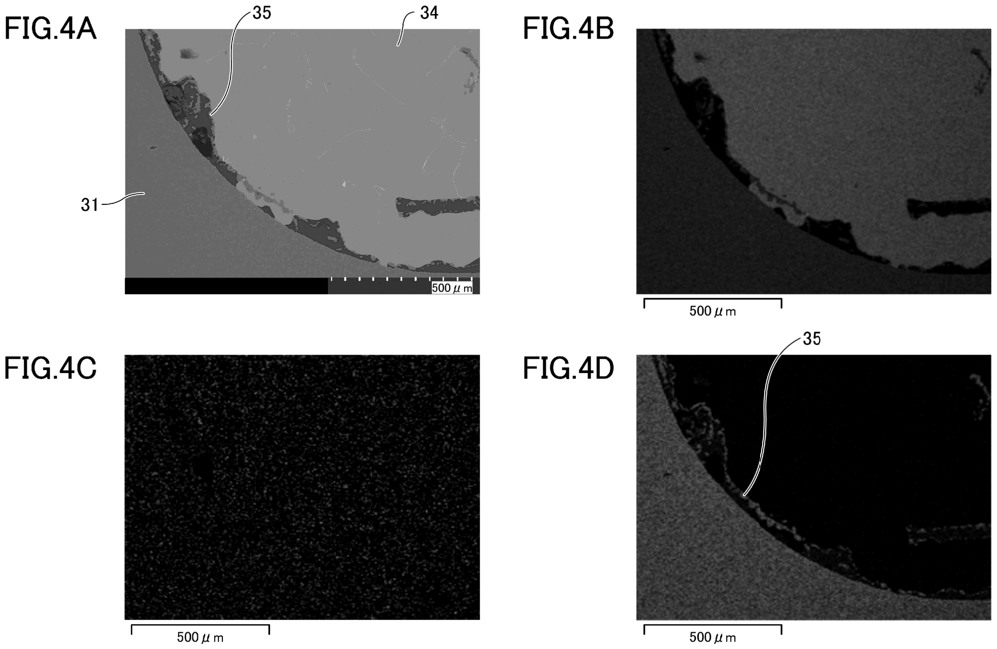

FIG. 4A, FIG. 4B, FIG. 4C, and FIG. 4D are diagrams illustrating the observation results of the sample manufactured according to the first embodiment. FIG. 4A illustrates a SEM image. FIG. 4B, FIG. 4C, and FIG. 4D illustrate the results of EDX of an observation region illustrated in FIG. 4A for aluminum, silicon, and oxygen, respectively.

In the sample manufactured according to the reference example, a region 36X with high silicon concentration was observed between a ceramic part 31X and a metal part 34X, as illustrated in FIG. 3A through FIG. 3D. It may be regarded that the ceramic part 31X and the metal part 34X are bonded to each other via the region 36X. In addition, a delamination 37X was observed in the ceramic part 31X near the region 36X.

On the other hand, in the sample manufactured according to the first embodiment, substantially no silicon was detected, and a region having a high silicon concentration was not observed between the ceramic part 31 and the metal part 34. No delamination was observed in the ceramic part 31, as illustrated in FIG. 4A through FIG. 4D. In addition, a region 35 having a high oxygen concentration was observed covering the metal part 34. Further, the ceramic part 31 and the metal part 34 were separated from each other. It may be regarded that the region 35 is an aluminum oxide film.

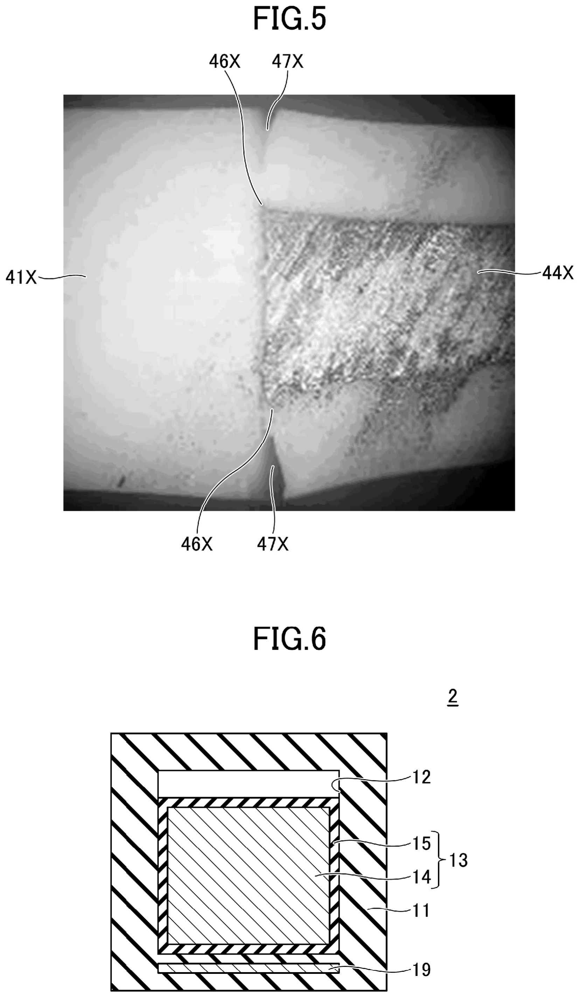

The present inventors manufactured another sample according to the reference example and observed the sample using an optical microscope. The observation results are illustrated in FIG. 5. FIG. 5 is a diagram illustrating an example of optical microscope observation result of the sample manufactured according to the reference example. As illustrated in FIG. 5, in the observed cross section, a crack 47X reaching an outer surface of the ceramic part 41X was observed near a corner 46X of the metal part 44X.

### <Second Embodiment>

A second embodiment will be described. The second embodiment differs from the first embodiment mainly in that a heating element is provided. FIG. 6 is a cross sectional view illustrating an example of the latent heat storage member according to a second embodiment.

As illustrated in FIG. 6, a latent heat storage member 2 according to the second embodiment includes a ceramic part 11, a latent heat storage part 13, and a heating element 19.

The heating element 19 is provided inside the ceramic part 11. The heating element 19 generates Joule heat when energized. The heating element 19 functions as a heater for heating the latent heat storage part 13. In order to reduce heat loss, it is preferable that a distance between the heating element 19 and the latent heat storage part 13 is small. The heating element 19 includes tungsten or molybdenum, or both tungsten and molybdenum, for example. The heating element 19 may include a mixture of tungsten and aluminum oxide or a mixture of molybdenum and aluminum oxide. In this case, the heating element 19 may further include one or more materials selected from silicon oxide, magnesium oxide, calcium carbonate, or the like. The heating element 19 is formed by firing a conductive paste simultaneously as the firing of the green sheets 21, 22, and 23, for example.

Otherwise, the configuration of the latent heat storage member 2 according to the second embodiment are the same as that of the latent heat storage member 1 according to the first embodiment.

The second embodiment can also obtain the same advantageous features or effects as those obtainable in the first embodiment. Further, by providing the heating element 19, latent heat can be stored in the latent heat storage member 2 using electric power.

According to the disclosed technique, the mechanical strength can be improved.

All examples and conditional language recited herein are intended for pedagogical purposes to aid the reader in understanding the invention and the concepts contributed by the present inventors to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A latent heat storage member (1, 2) comprising:
a ceramic part (11) having a closed space (12) formed therein; and
a latent heat storage part (13) including aluminum and provided inside the closed space (12),
wherein a purity of a main component of the ceramic part (11) is 99.5 mass% or higher.

2. The latent heat storage member (1, 2) as claimed in claim 1, wherein the ceramic part (11) includes aluminum oxide as the main component.

3. The latent heat storage member (1, 2) as claimed in claim 1 or 2, wherein the purity of the main component of the ceramic part (11) is 99.9 mass% or higher.

4. The latent heat storage member (1, 2) as claimed in claim 1 or 2, wherein a concentration of silicon in the ceramic part (11) is 0.5 mass% or lower.

5. The latent heat storage member (1, 2) as claimed in claim 1 or 2, wherein the ceramic part (11) does not include glass.

6. The latent heat storage member (1, 2) as claimed in claim 1 or 2, wherein the latent heat storage part (13) includes:
a metal part (14) including aluminum; and
an oxide film (15) covering the metal part (14).

7. The latent heat storage member (1, 2) as claimed in claim 6, wherein the oxide film (15) has a thickness in a range greater than or equal to 0.1 µm and less than or equal to 80 µm.

8. The latent heat storage member (1, 2) as claimed in claim 6, wherein the oxide film (15) has a thickness in a range greater than or equal to 0.1 µm and less than or equal to 30 µm.

9. The latent heat storage member (1, 2) as claimed in claim 1 or 2, wherein the ceramic part (11) is integrally formed and is monolithic.

10. The latent heat storage member (1, 2) as claimed in claim 1 or 2, wherein the ceramic part (11) does not have a bonding portion in the closed space (12).

11. The latent heat storage member (1, 2) as claimed in claim 1 or 2, wherein:
a gap is formed between the latent heat storage part (13) and at least a portion of an inner wall surface of the closed space (12),
the latent heat storage part (13) is in contact with the inner wall surface of the closed space (12) but the latent heat storage part (13) is not bonded to the inner wall surface, and
the latent heat storage part (13) is movable inside the closed space (12).

12. The latent heat storage member (1, 2) as claimed in claim 6, wherein:
the metal part (14) includes aluminum in a proportion of 99 mass% or higher, and
the metal part (14) has a melting point that is 200°C or higher.

13. A method for manufacturing a latent heat storage member (1, 2), comprising:
preparing a composite (1A) that includes a metal part including aluminum and an unfired ceramic part accommodating the metal part; and
heating the composite (1A) to fire the unfired ceramic part,
wherein a purity of a main component of the unfired ceramic part is 99.5 mass% or higher.

14. The method for manufacturing a latent heat storage member (1, 2) as claimed in claim 13, wherein:
the unfired ceramic part does not include a sintering aid, and
the heating the composite (1A) causes the unfired ceramic part to undergo solid-phase sintering.
